# EUROPEAN PATENT APPLICATION

(11) **EP 4 843 876 A1**
(43) Date of publication of application: **25.11.2026**
(21) Application number: 25744702.9
(22) Date of filing: 23.01.2025
(51) Int. Cl.: B62J 45/411, B62M 6/50

(54) **TORQUE SENSOR DEVICE AND POWER-ASSISTED BICYCLE**

(30) Priority: 26.01.2024 CN 202410123216; 26.01.2024 CN 202420205254 U
(71) Applicant: Dahon Tech (Shenzhen) Co., Ltd., Shenzhen, Guangdong 518100 (CN)
(72) Inventor: HAN, Dewei, Shenzhen, Guangdong 518100 (CN); SONG, Haipeng, Shenzhen, Guangdong 518100 (CN); WEN, Huiyao, Shenzhen, Guangdong 518100 (CN)
(74) Representative: Bayramoglu et al.
(86) International application number: PCT/CN2025/074490
(87) International publication number: WO 2025/157239

(57) **Abstract**

A torque sensor device and an electric-assisted bicycle are provided. The torque sensor device includes: a bottom bracket assembly; a first bearing and a spindle, where the first bearing is disposed inside the bottom bracket assembly; the spindle extends through an inner ring of the first bearing; the spindle is rotatable about a rotation axis relative to the bottom bracket assembly via the first bearing; and a pressure sensor, where the pressure sensor is disposed, in a radial direction of the spindle, between an outer ring of the first bearing and the bottom bracket assembly, such that the spindle transmits a force to the pressure sensor via the first bearing; or, the bottom bracket assembly includes at least two components in the radial direction of the spindle, and the pressure sensor is disposed, in the radial direction, between two of the components of the bottom bracket assembly, such that the spindle transmits a force to the pressure sensor via the first bearing and the components. The torque sensor device can be connected to a main control circuit in a wired manner, resulting in a simple structure and reducing production costs.

## Description

### TECHNICAL FIELD

The present disclosure relates to the technical field of bicycles, and in particular to a torque sensor device and an electric-assisted bicycle.

### BACKGROUND TECHNOLOGY

As a new type of vehicle, an electric-assisted bicycle uses a battery as an auxiliary power source, and is provided with a motor and a power assist system, enabling the integration of manual riding and motor assistance.

As a core component of the electric-assisted bicycle, a torque sensor can detect the pedaling torque and cadence of the bicycle in real time. These signals are fed into the electric assist system, which instantly outputs an electric assist power strictly proportional to the rider's pedaling power, thereby delivering an effortless and responsive riding experience.

In conventional art, the torque sensor requires a sensing element and its amplification circuit to be mounted on a spindle. As the spindle is a rotating part, the power supply and output signals of the circuit of the sensing element must be wirelessly connected to a main control circuit, leading to a complex structure and high cost.

### CONTENT OF THE INVENTION

In view of this, the present disclosure provides a torque sensor device and an electric-assisted bicycle that feature a simple structure and low cost, so as to solve the problems of complex structure and high cost in the torque sensor device in conventional art.

A torque sensor device includes:
a bottom bracket assembly;
a first bearing and a spindle, where the first bearing is disposed inside the bottom bracket assembly; the spindle extends through an inner ring of the first bearing; and the spindle is rotatable about a rotation axis relative to the bottom bracket assembly via the first bearing; and
a pressure sensor, where the pressure sensor is disposed, in a radial direction of the spindle, between an outer ring of the first bearing and the bottom bracket assembly, such that the spindle transmits a force to the pressure sensor via the first bearing; or, the bottom bracket assembly includes at least two components in the radial direction of the spindle, and the pressure sensor is disposed, in the radial direction, between two of the components of the bottom bracket assembly, such that the spindle transmits a force to the pressure sensor via the first bearing and the components.

In an embodiment, the bottom bracket assembly includes a bottom bracket shell, a first sleeve, and a sleeve tube; the first sleeve is disposed inside the bottom bracket shell; the first bearing is mounted inside the first sleeve; the sleeve tube is sleeved on the spindle; at least a portion of the sleeve tube is clamped between the first sleeve and the first bearing; and the pressure sensor is disposed between the outer ring of the first bearing and the sleeve tube.

In an embodiment, a side of the sleeve tube facing the first bearing is provided with a mounting groove; and at least a portion of the pressure sensor is accommodated in the mounting groove.

In an embodiment, a thickness of the pressure sensor is greater than or equal to a width of a gap between the outer ring of the first bearing and the sleeve tube.

In an embodiment, the bottom bracket assembly includes a bottom bracket shell, a first sleeve, and a sleeve tube; the first sleeve is disposed inside the bottom bracket shell; the first bearing is mounted inside the first sleeve; the sleeve tube is sleeved on the spindle; at least a portion of the sleeve tube is clamped between the first sleeve and the first bearing; and the pressure sensor is disposed between the sleeve tube and the first sleeve.

In an embodiment, at least one of mutually facing surfaces of the sleeve tube and the first sleeve is provided with a mounting groove; and at least a portion of the pressure sensor is disposed in the mounting groove.

In an embodiment, the surface of the sleeve tube facing the first sleeve is provided with the mounting groove.

In an embodiment, the surface of the first sleeve facing the sleeve tube is provided with the mounting groove.

In an embodiment, the surface of the sleeve tube facing the first sleeve and the surface of the first sleeve facing the sleeve tube are each provided with the mounting groove.

In an embodiment, a thickness of the pressure sensor is greater than or equal to a width of a gap between the sleeve tube and the first sleeve.

In an embodiment, the torque sensor device further includes a circuit board; and the pressure sensor is electrically connected to the circuit board.

In an embodiment, the bottom bracket assembly includes a bottom bracket shell, a first sleeve, and a sleeve tube; the first sleeve is disposed inside the bottom bracket shell; the first bearing is mounted inside the first sleeve; the sleeve tube includes a first tube and a second tube connected to each other in an axial direction; a diameter of the first tube is greater than a diameter of the second tube, and the first tube and the second tube are connected to form a first step portion; and the first tube is clamped between the first sleeve and the first bearing; and
the circuit board is disposed on an outer circumferential surface of the second tube; the pressure sensor includes one end disposed between the outer ring of the first bearing and the first tube and another end passing through the first step portion and connected to the circuit board.

In an embodiment, the first step portion is provided with an opening; and the another end of the pressure sensor passes through the opening and is electrically connected to the circuit board.

In an embodiment, the sleeve tube further includes a third tube; the third tube is connected to an end of the second tube away from the first tube; a diameter of the third tube is greater than the diameter of the second tube; and a second step portion is formed between the third tube and the second tube;
the sleeve tube further includes a first baffle and a second baffle; the first baffle and the second baffle are disposed on the second tube, and are spaced apart in a circumferential direction; and the first baffle and the second baffle each include two ends respectively connected to the first step portion and the second step portion; and
the second tube, the first step portion, the second step portion, the first baffle, the second baffle, and the bottom bracket shell together define an accommodating cavity; and the circuit board is disposed in the accommodating cavity.

In an embodiment, the torque sensor device further includes a cadence detection assembly; and the cadence detection assembly is configured to detect a cadence of the spindle.

In an embodiment, the cadence detection assembly includes a reflector and a photoelectric switch; the reflector is annular and sleeved on the spindle; the photoelectric switch is mounted on the bottom bracket assembly; and the reflector cooperates with the photoelectric switch to detect the cadence of the spindle.

In an embodiment, the torque sensor device further includes a second bearing; the second bearing is disposed inside the bottom bracket assembly, and is spaced apart from the first bearing in an axial direction of the spindle; and the spindle extends through the second bearing.

In an embodiment, the bottom bracket assembly includes a bottom bracket shell and a second sleeve; and the second bearing is mounted inside the bottom bracket shell via the second sleeve.

An electric-assisted bicycle includes a chainring, a crank, a cassette, a chain, and the torque sensor device, where the chainring and the crank are connected to the spindle; the chain is disposed on the chainring and the cassette; and the pressure sensor is disposed, in a radial direction parallel to the chain, between the first bearing and the bottom bracket assembly, or between the components of the bottom bracket assembly.

In the torque sensor device and the electric-assisted bicycle, the pressure sensor is not directly attached to the spindle, but is disposed between the first bearing and the bottom bracket assembly, or between two components of the bottom bracket assembly. In this way, the torque sensor device can be connected to a main control circuit in a wired manner, resulting in a simple structure and reducing production costs.

### DESCRIPTION OF THE DRAWINGS

FIG. 1 is an isometric view of a torque sensor device according to an embodiment of the present disclosure;
FIG. 2 is an isometric view of the torque sensor device shown in FIG. 1 from another perspective;
FIG. 3 is an exploded view of the torque sensor device shown in FIG. 1;
FIG. 4 is a front view of the torque sensor device shown in FIG. 1;
FIG. 5 is a cross-sectional view of the torque sensor device shown in FIG. 4 taken along line A-A;
FIG. 6 is a side view of the torque sensor device shown in FIG. 1;
FIG. 7 is a cross-sectional view of the torque sensor device shown in FIG. 6 taken along line B-B; and
FIG. 8 is another exploded view of the torque sensor device shown in FIG. 1.

### Reference Numerals:

100. torque sensor device; 10. bottom bracket assembly; 11. first sleeve; 12. second sleeve; 13. sleeve tube; 131. first tube; 132. second tube; 133. third tube; 134. first step portion; 1341. opening; 135. second step portion; 136. first baffle; 137. second baffle; 14. mounting groove; 15. accommodating cavity; 20. first bearing; 30. spindle; 40. pressure sensor; 50. second bearing; 60. circuit board; 71. reflector; and 72. photoelectric switch.

### SPECIFIC IMPLEMENTATIONS

To enable the objectives, features, and advantages mentioned above of the present disclosure to be more apparent and easily understood, specific implementations of the present disclosure will be described in detail below in conjunction with the drawings. The following describes many details in order to provide a thorough understanding of the present disclosure. However, the present disclosure can be implemented in many other ways other than those described herein, and those skilled in the art can make similar improvements without departing from the connotation of the present disclosure, and thus the present disclosure is not limited to the specific embodiments disclosed below.

In the description of the present disclosure, the terms "central", ''longitudinal'', ''transverse'', ''long'', ''wide'', ''thick'', "upper", "lower", ''front'', ''back'', "left", "right", "vertical", "horizontal", ''top'', ''bottom'', "inner", "outer", ''clockwise'', ''anticlockwise'', ''axial'', ''radial'' and ''circumferential'' etc. are used to indicate orientations shown in the accompanying drawings. It should be noted that these terms are merely intended to facilitate a simple description of the present disclosure, rather than to indicate or imply that the mentioned apparatus or elements must have the specific orientation or be constructed and operated in the specific orientation. Therefore, these terms may not be construed as a limitation to the present disclosure.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one such feature. In the descriptions about the present disclosure, "a plurality of" means at least two, for example, two or three, unless otherwise specifically limited.

In the present disclosure, unless otherwise clearly limited, the terms ''installation'', "interconnection", ''connection'' and "fixation" etc. are intended to be understood in a broad sense. For example, the "connection" may be a fixed connection, a removable connection or an integral connection; may be a mechanical connection or an electrical connection; may be a direct connection or an indirect connection using a medium; and may be a communication or an interaction between two elements, unless otherwise clearly specified and limited. Those of ordinary skill in the art may understand specific meanings of the above terms in the present disclosure based on a specific situation.

In the present disclosure, unless otherwise clearly specified and limited, when it is described that a first feature is ''above'' or ''below'' a second feature, it indicates that the first and second features are in direct contact or the first and second features are in indirect contact through a medium. In addition, when it is described that the first feature is "over", "above" and "on" the second feature, it indicates that the first feature is directly or obliquely above the second feature, or simply indicates that an altitude of the first feature is higher than that of the second feature. When it is described that the first feature is ''under'', ''below'' or ''beneath'' the second feature, it indicates that the first feature is directly or obliquely under the second feature or simply indicates that an altitude of the first feature is lower than that of the second feature.

It should be noted that when a component is ''fixed'' or ''provided'' on another component, the component may be fixed on another component directly or via an intermediate component. When a component is connected to another component, the component may be connected to another component directly or via an intermediate component. The terms "vertical", "horizontal", "upper", "lower", "left", "right" and other similar expressions used herein are for illustrative purposes only, rather than to mean the only implementation.

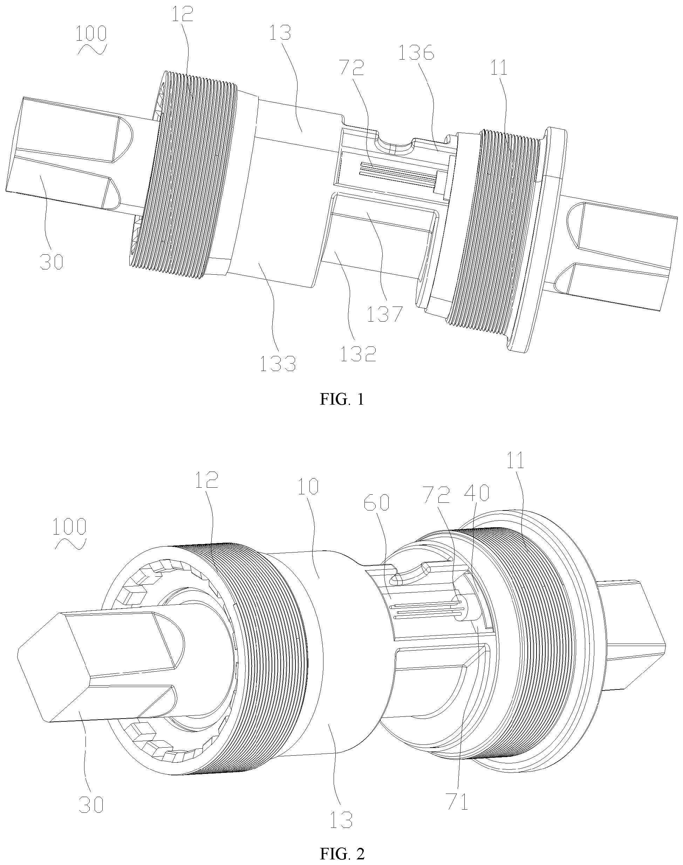

An embodiment of the present disclosure provides an electric-assisted bicycle, including torque sensor device 100, a chainring, a crank, a cassette, and a chain. Referring to FIGS. 1 to 3, the torque sensor device 100 includes bottom bracket assembly 10, first bearing 20, and spindle 30. The first bearing 20 is disposed inside the bottom bracket assembly 10. The spindle 30 is disposed inside the first bearing 20, and is connected to an inner ring of the first bearing 20. The spindle 30 is rotatable about a rotation axis relative to the bottom bracket assembly 10 via the first bearing 20. The chainring and the crank are connected to the spindle 30, and the chain is disposed on the chainring and the cassette.

In the above configuration, a rider's pedaling torque tightens the chain between the chainring and the cassette via the crank, causing the spindle 30 to generate a force component and displacement in a direction parallel to the chain. The torque sensor device of the electric-assisted bicycle detects the pedaling torque and cadence as input signals for the electric assist system, such that the system instantly outputs an electric assist power proportional to the rider's pedaling power, achieving an effortless riding experience.

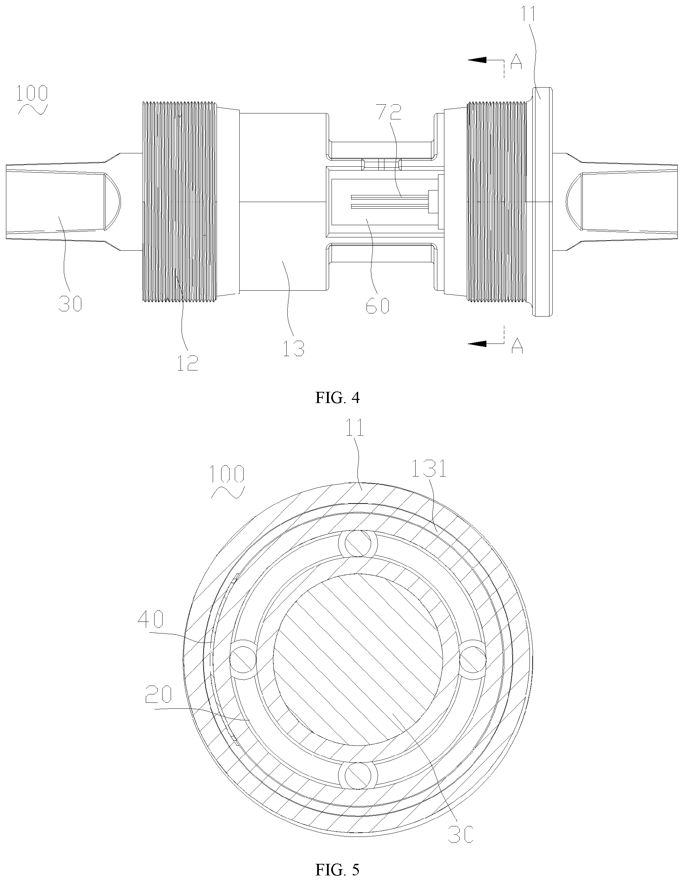

Furthermore, referring to FIGS. 4 to 7, the torque sensor device 100 further includes pressure sensor 40. The pressure sensor 40 is disposed, in a radial direction of the spindle 30, between an outer ring of the first bearing 20 and the bottom bracket assembly 10. Specifically, the pressure sensor 40 is disposed, in the radial direction parallel to the chain, between the first bearing 20 and the bottom bracket assembly 10. The rider's pedaling torque tightens the chain between the chainring and the cassette via the crank, causing the spindle 30 to generate a force component and displacement in the direction parallel to the chain. The spindle 30 transmits a force to the pressure sensor 40 via the first bearing 20. Thus, the pressure sensor 40 detects the rider's pedaling torque as an input signal, causing the system to instantly output an electric assist power strictly proportional to the rider's pedaling power, thereby achieving an effortless riding experience. Alternatively, the bottom bracket assembly 10 includes at least two components in the radial direction of the spindle 30, and the pressure sensor 40 is disposed, in the radial direction, between two of the components of the bottom bracket assembly 10. Specifically, the pressure sensor 40 is disposed, in the radial direction parallel to the chain, between two components of the bottom bracket assembly 10. The rider's pedaling torque tightens the chain between the chainring and the cassette via the crank, causing the spindle 30 to generate a force component and displacement in the direction parallel to the chain. The spindle 30 transmits a force to the pressure sensor 40 via the first bearing 20 and the components of the bottom bracket assembly 10. Thus, the pressure sensor 40 detects the rider's pedaling torque as an input signal, causing the system to instantly output an electric assist power strictly proportional to the rider's pedaling power, thereby achieving an effortless riding experience.

In the electric-assisted bicycle provided by the embodiment of the present disclosure, the pressure sensor 40 is not directly attached to the spindle 30, but is disposed between the first bearing 20 and the bottom bracket assembly 10, or between two components of the bottom bracket assembly 10. In this way, the torque sensor device 100 can be connected to a main control circuit in a wired manner, resulting in a simple structure and reducing production costs.

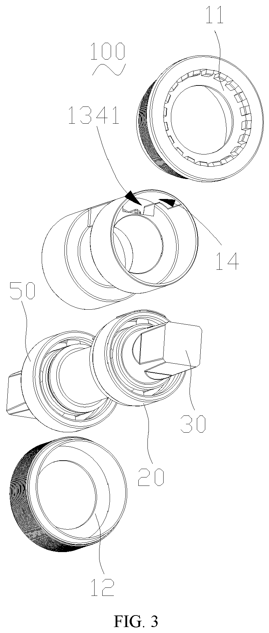

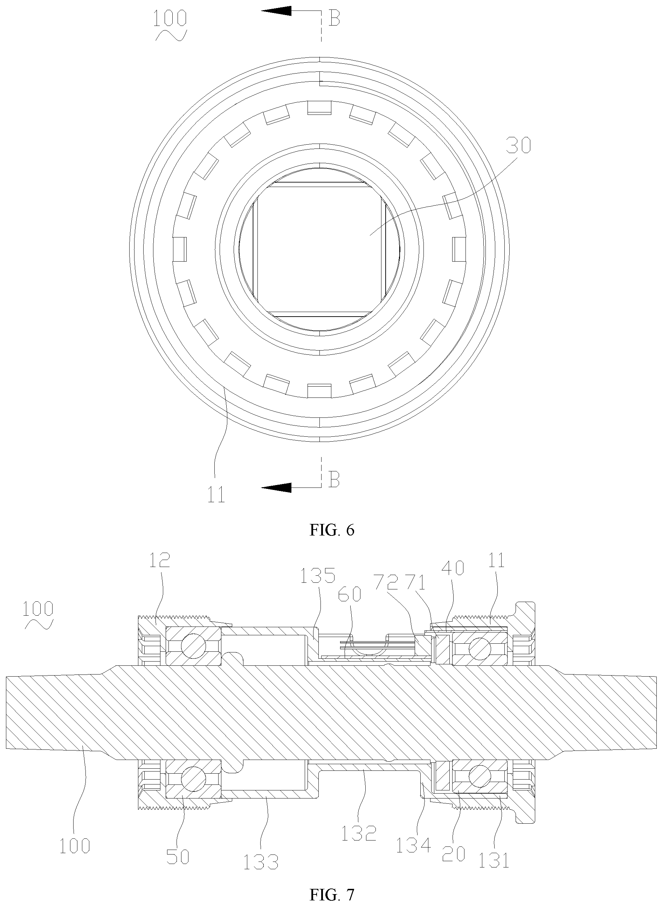

In some embodiments, still referring to FIGS. 3 and 7, the torque sensor device 100 further includes second bearing 50. The second bearing 50 is disposed inside the bottom bracket assembly 10 and is spaced apart from the first bearing 20 in an axial direction of the spindle 30, and the spindle 30 extends through the second bearing 50. Thus, the spindle 30 rotates relative to the bottom bracket assembly 10 via the first bearing 20 and the second bearing 50, and the first bearing 20 and the second bearing 50 together support the spindle 30, ensuring the stability of the rotation of the spindle 30.

Still referring to FIGS. 2 and 7, the bottom bracket assembly 10 includes a bottom bracket shell, first sleeve 11, second sleeve 12, and sleeve tube 13. The first sleeve 11 and the second sleeve 12 are both disposed inside the bottom bracket shell, and the second bearing 50 is disposed inside the second sleeve 12. The sleeve tube 13 is sleeved on the spindle 30, and is at least partially disposed, in the radial direction of the spindle 30, between the first bearing 20 and the first sleeve 11. Specifically, the sleeve tube 13 is a plastic part. The first sleeve 11 and the second sleeve 12 respectively serve to support the first bearing 20 and the second bearing 50, and the sleeve tube 13 facilitates the mounting of the pressure sensor 40. It is conceivable that in other embodiments, the bottom bracket assembly 10 may exclude the first sleeve 11, the second sleeve 12, and the sleeve tube 13, which is not limited herein.

In some specific implementations, the pressure sensor 40 is disposed between the outer ring of the first bearing 20 and the sleeve tube 13. In this way, the spindle 30 transmits a force to the pressure sensor 40 via the first bearing 20. In other specific implementations, the pressure sensor 40 is disposed between the sleeve tube 13 and the first sleeve 11. In this case, the spindle 30 transmits a force to the pressure sensor 40 via the first bearing 20 and the sleeve tube 13. It is conceivable that in other implementations, when the bottom bracket assembly 10 further includes another component, the pressure sensor 40 may also be disposed between that component and the sleeve tube 13, as long as the pressure sensor 40 can receive the force transmitted by the spindle 30.

It should be noted here that when the pressure sensor 40 is mounted between the outer ring of the first bearing 20 and the sleeve tube 13, a thickness of the pressure sensor 40 may be exactly equal to a width of a gap between the outer ring of the first bearing 20 and the sleeve tube 13, or slightly greater than the width of the gap between the outer ring of the first bearing 20 and the sleeve tube 13. In this case, the gap between the first bearing 20 and the sleeve tube 13 is filled by the pressure sensor 40, such that the spindle 30 will not drive the first bearing 20 to move in the radial direction of the spindle 30 when the rider rides. It is conceivable that in other embodiments, when the pressure sensor 40 is mounted between the outer ring of the first bearing 20 and the sleeve tube 13, the thickness of the pressure sensor 40 may also be smaller than the width of the gap between the outer ring of the first bearing 20 and the sleeve tube 13. In this case, since the width of the gap between the first bearing 20 and the sleeve tube 13 is greater than the thickness of the pressure sensor 40, the spindle 30 will drive the first bearing 20 to move slightly in the radial direction of the spindle 30 when the rider rides. When the pressure sensor 40 is disposed between the sleeve tube 13 and the first sleeve 11, the thickness of the pressure sensor 40 may be slightly greater than the width of the gap between the sleeve tube 13 and the first sleeve 11, may be equal to the width of the gap between the sleeve tube 13 and the first sleeve 11, or may be smaller than the width of the gap between the sleeve tube 13 and the first bearing 20, which is also not limited herein.

Furthermore, still referring to FIG. 3, a side of the sleeve tube 13 facing the first bearing 20 is provided with mounting groove 14, and at least a portion of the pressure sensor 40 is accommodated in the mounting groove 14. Alternatively, at least one of mutually facing surfaces of the sleeve tube 13 and the first sleeve 11 is provided with the mounting groove 14, and at least a portion of the pressure sensor 40 is disposed in the mounting groove 14. In some specific implementations, the surface of the sleeve tube 13 facing the first sleeve 11 is provided with the mounting groove 14. In other specific implementations, the surface of the first sleeve 11 facing the sleeve tube 13 is provided with the mounting groove 14. In still other specific implementations, both the surface of the sleeve tube 13 facing the first sleeve 11 and the surface of the first sleeve 11 facing the sleeve tube 13 are provided with mounting grooves 14. This facilitates the assembly of the pressure sensor 40.

Still referring to FIG. 7, the torque sensor device 100 further includes circuit board 60, and the pressure sensor 40 is electrically connected to the circuit board 60. The pressure sensor 40 detects the pedaling torque and sends a signal to the circuit board 60 through a change in its own resistance value. The circuit board 60 processes the signal and converts it into a voltage signal for a controller, and the motor of the electric-assisted bicycle then outputs a corresponding power, thereby providing assistance proportional to the pedaling torque.

The sleeve tube 13 includes first tube 131 and second tube 132 connected to each other in the axial direction. A diameter of the first tube 131 is greater than a diameter of the second tube 132, and the first tube and the second tube are connected to form first step portion 134. The first tube 131 is clamped between the first sleeve 11 and the first bearing 20. The circuit board 60 is disposed on an outer circumferential surface of the second tube 132. The pressure sensor 40 includes one end disposed between the outer ring of the first bearing 20 and the first tube 131 and another end passing through the first step portion 134 and connected to the circuit board 60. This facilitates the mounting of the pressure sensor 40 and the circuit board 60.

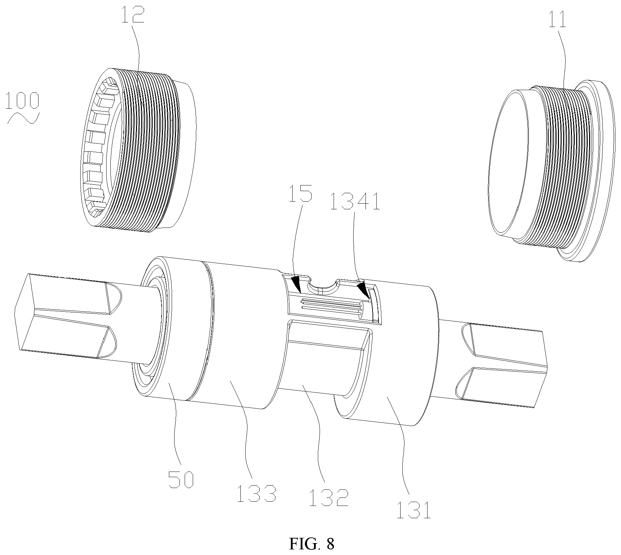

Furthermore, referring to FIGS. 7 and 8, the sleeve tube 13 further includes third tube 133, and the third tube 133 is connected to an end of the second tube 132 away from the first tube 131. A diameter of the third tube 133 is greater than the diameter of the second tube 132, and the third tube and the second tube are connected to form second step portion 135. An end of the third tube 133 away from the second tube 132 extends into the second sleeve 12. The sleeve tube 13 further includes first baffle 136 and second baffle 137. The first baffle 136 and the second baffle 137 are both disposed on the second tube 132 and are spaced apart in the circumferential direction, and each include two ends respectively connected to the first step portion 134 and the second step portion 135. The second tube 132, the first step portion 134, the second step portion 135, the first baffle 136, the second baffle 137, and the bottom bracket shell together define accommodating cavity 15, and the circuit board 60 is disposed in the accommodating cavity 15. Thus, on the one hand, the design facilitates the mounting of the circuit board 60. On the other hand, it allows the circuit board 60 to be disposed in the accommodating cavity 15, thereby protecting the circuit board 60.

Specifically, the first step portion 134 is provided with opening 1341. One end of the pressure sensor 40 is located inside the first tube 131, while another end thereof passes through the opening 1341 and extends into the accommodating cavity 15 to be electrically connected to the circuit board 60.

In some embodiments, the torque sensor device 100 further includes a cadence detection assembly, and the cadence detection assembly is electrically connected to the circuit board 60. The cadence detection assembly detects a cadence of the spindle 30, and sends a signal to the circuit board 60. The circuit board 60 processes and sends the signal to the controller, and the motor of the electric-assisted bicycle outputs a corresponding frequency, providing assistance proportional to the cadence.

Furthermore, still referring to FIG. 7, the cadence detection assembly includes reflector 71 and photoelectric switch 72. The reflector 71 is annular and sleeved on the spindle 30. The photoelectric switch 72 is mounted on the second tube 132, and is located inside the accommodating cavity 15. The photoelectric switch 72 emits light through the opening 1341 toward the reflector 71. The reflector 71 cooperates with the photoelectric switch 72 to detect the cadence of the spindle 30. The photoelectric switch 72 emits light, and the reflector 71 rotates with the rotation of the spindle 30. The reflector 71 reflects the light emitted by the photoelectric switch 72 during its rotation with the spindle 30. The photoelectric switch 72 obtains the cadence of the spindle 30 based on the reflection of the reflector 71, and sends a signal to the circuit board 60. The circuit board 60 processes and sends the signal to the controller, and the motor of the electric-assisted bicycle outputs a corresponding frequency, thereby providing assistance proportional to the cadence.

It is conceivable that in other embodiments, the cadence detection assembly may also be configured in other manners, as long as the purpose of detecting the cadence of the spindle 30 can be achieved.

Another embodiment of the present disclosure further provides torque sensor device 100 included in the above electric-assisted bicycle. The torque sensor device 100 has the same beneficial effects as the above electric-assisted bicycle, which will not be described in detail here.

The technical features of the foregoing embodiments can be employed in arbitrary combinations. For brevity of description, not all possible combinations of the technical features of the foregoing embodiments are described. However, the combinations of the technical features should be construed as falling within the scope described in this specification as long as there is no contradiction in the combinations.

The above described are merely several embodiments of the present disclosure. Although these embodiments are described specifically and in detail, they should not be construed as a limitation to the patent scope of the present disclosure. It should be noted that those of ordinary skill in the art can further make several variations and improvements without departing from the concept of the present disclosure, and all of these fall within the protection scope of the present disclosure. Therefore, the protection scope of the present disclosure shall be subject to the protection scope defined by the claims.

## Claims

1. A torque sensor device, comprising:
a bottom bracket assembly (10);
a first bearing (20) and a spindle (30), wherein the first bearing (20) is disposed inside the bottom bracket assembly (10); the spindle (30) extends through an inner ring of the first bearing (20); and the spindle (30) is rotatable about a rotation axis relative to the bottom bracket assembly (10) via the first bearing (20); and
a pressure sensor (40), wherein the pressure sensor (40) is disposed, in a radial direction of the spindle (30), between an outer ring of the first bearing (20) and the bottom bracket assembly (10), such that the spindle (30) transmits a force to the pressure sensor (40) via the first bearing (20); or the bottom bracket assembly (10) comprises at least two components in the radial direction of the spindle (30), and the pressure sensor (40) is disposed, in the radial direction, between two of the components of the bottom bracket assembly (10), such that the spindle (30) transmits a force to the pressure sensor (40) via the first bearing (20) and the components.

2. The torque sensor device according to claim 1, wherein the bottom bracket assembly (10) comprises a bottom bracket shell, a first sleeve (11), and a sleeve tube (13); the first sleeve (11) is disposed inside the bottom bracket shell; the first bearing (20) is mounted inside the first sleeve (11); the sleeve tube (13) is sleeved on the spindle (30); at least a portion of the sleeve tube (13) is clamped between the first sleeve (11) and the first bearing (20); and the pressure sensor (40) is disposed between the outer ring of the first bearing (20) and the sleeve tube (13).

3. The torque sensor device according to claim 2, wherein a side of the sleeve tube (13) facing the first bearing (20) is provided with a mounting groove (14); and at least a portion of the pressure sensor (40) is accommodated in the mounting groove (14).

4. The torque sensor device according to claim 2, wherein a thickness of the pressure sensor (40) is greater than or equal to a width of a gap between the outer ring of the first bearing (20) and the sleeve tube (13).

5. The torque sensor device according to claim 1, wherein the bottom bracket assembly (10) comprises a bottom bracket shell, a first sleeve (11), and a sleeve tube (13); the first sleeve (11) is disposed inside the bottom bracket shell; the first bearing (20) is mounted inside the first sleeve (11); the sleeve tube (13) is sleeved on the spindle (30); at least a portion of the sleeve tube (13) is clamped between the first sleeve (11) and the first bearing (20); and the pressure sensor (40) is disposed between the sleeve tube (13) and the first sleeve (11).

6. The torque sensor device according to claim 5, wherein at least one of mutually facing surfaces of the sleeve tube (13) and the first sleeve (11) is provided with a mounting groove (14); and at least a portion of the pressure sensor (40) is disposed in the mounting groove (14).

7. The torque sensor device according to claim 6, wherein the surface of the sleeve tube (13) facing the first sleeve (11) is provided with the mounting groove (14).

8. The torque sensor device according to claim 6, wherein the surface of the first sleeve (11) facing the sleeve tube (13) is provided with the mounting groove (14).

9. The torque sensor device according to claim 6, wherein the surface of the sleeve tube (13) facing the first sleeve (11) and the surface of the first sleeve (11) facing the sleeve tube (13) are each provided with the mounting groove (14).

10. The torque sensor device according to claim 5, wherein a thickness of the pressure sensor (40) is greater than or equal to a width of a gap between the sleeve tube (13) and the first sleeve (11).

11. The torque sensor device according to claim 1, wherein the torque sensor device further comprises a circuit board (60); and the pressure sensor (40) is electrically connected to the circuit board (60).

12. The torque sensor device according to claim 11, wherein the bottom bracket assembly (10) comprises a bottom bracket shell, a first sleeve (11), and a sleeve tube (13); the first sleeve (11) is disposed inside the bottom bracket shell; the first bearing (20) is mounted inside the first sleeve (11); the sleeve tube (13) comprises a first tube (131) and a second tube (132) connected to each other in an axial direction; a diameter of the first tube (131) is greater than a diameter of the second tube (132), and the first tube and the second tube are connected to form a first step portion (134); and the first tube (131) is clamped between the first sleeve (11) and the first bearing (20); and
the circuit board (60) is disposed on an outer circumferential surface of the second tube (132); the pressure sensor (40) comprises one end disposed between the outer ring of the first bearing (20) and the first tube (131) and another end passing through the first step portion (134) and connected to the circuit board (60).

13. The torque sensor device according to claim 12, wherein the first step portion (134) is provided with an opening (1341); and the another end of the pressure sensor (40) passes through the opening (1341) and is electrically connected to the circuit board (60).

14. The torque sensor device according to claim 12, wherein the sleeve tube (13) further comprises a third tube (133); the third tube (133) is connected to an end of the second tube (132) away from the first tube (131); a diameter of the third tube (133) is greater than the diameter of the second tube (132); and a second step portion (135) is formed between the third tube and the second tube;
the sleeve tube (13) further comprises a first baffle (136) and a second baffle (137); the first baffle (136) and the second baffle (137) are disposed on the second tube (132), and are spaced apart in a circumferential direction; and the first baffle and the second baffle each comprise two ends respectively connected to the first step portion (134) and the second step portion (135); and
the second tube (132), the first step portion (134), the second step portion (135), the first baffle (136), the second baffle (137), and the bottom bracket shell together define an accommodating cavity (15); and the circuit board (60) is disposed in the accommodating cavity (15).

15. The torque sensor device according to claim 1, wherein the torque sensor device further comprises a cadence detection assembly; and the cadence detection assembly is configured to detect a cadence of the spindle (30).

16. The torque sensor device according to claim 15, wherein the cadence detection assembly comprises a reflector (71) and a photoelectric switch (72); the reflector (71) is annular and sleeved on the spindle (30); the photoelectric switch (72) is mounted on the bottom bracket assembly (10); and the reflector (71) cooperates with the photoelectric switch (72) to detect the cadence of the spindle (30).

17. The torque sensor device according to claim 1, wherein the torque sensor device further comprises a second bearing (50); the second bearing (50) is disposed inside the bottom bracket assembly (10), and is spaced apart from the first bearing (20) in an axial direction of the spindle (30); and the spindle (30) extends through the second bearing (50).

18. The torque sensor device according to claim 17, wherein the bottom bracket assembly (10) comprises a bottom bracket shell and a second sleeve (12); and the second bearing (50) is mounted inside the bottom bracket shell via the second sleeve (12).

19. An electric-assisted bicycle, comprising a chainring, a crank, a cassette, a chain, and the torque sensor device according to any one of claims 1 to 18, wherein the chainring and the crank are connected to the spindle (30); the chain is disposed on the chainring and the cassette; and the pressure sensor (40) is disposed, in a radial direction parallel to the chain, between the first bearing (20) and the bottom bracket assembly (10), or between the components of the bottom bracket assembly (10).
